# EUROPEAN PATENT APPLICATION

(11) **EP 4 035 802 A1**
(43) Date of publication of application: **03.08.2022**
(21) Application number: 21154057.0
(22) Date of filing: 28.01.2021
(51) Int. Cl.: B22F 10/20, B22F 10/28, B22F 10/80, B33Y 50/00, G05B 19/4099, G06F 30/20, G05B 19/418, B29C 64/386, B33Y 10/00

(54) **THERMAL MODELLING APPROACH FOR POWDER BED FUSION ADDITIVE MANUFACTURING**

(71) Applicant: Siemens Energy Global GmbH & Co. KG, 81739 München (DE); UNIVERSITY OF WATERLOO, Waterloo, Ontario N2L 3G1 (CA)
(72) Inventor: Bonakdar, Ali, Nuns Island (Montreal), H3E2B7 (CA); Imani Shahabad, Shahriar, Waterloo, N2L 1W2 (CA); Toyserkani, Ehsan, Waterloo, N2V 0E7 (CA)

(57) **Abstract**

A computer-implemented thermal modelling method for powder bed fusion additive manufacturing presented. The method comprises a microscale modelling (i) step, including a single-track simulation of a powder bed (6) with an energy beam (5), wherein a Gaussian heat source (G) and an anisotropic heat conductivity of a build-up material (6) are considered, and wherein heat source parameters are identified (I); and a macroscale modelling (ii) step, using a Gaussian effective heat flux to provide line-type irradiation scans (V), wherein the heat source parameters (H, v) and a heat conductivity coefficient are adapted to a macroscale. Moreover, a related computer program product and an additive manufacturing method are provided.

## Description

The present invention relates to a computer-implemented modelling or simulation method for powder bed fusion additive manufacturing. Moreover, a related computer program product and additive manufacturing method for producing components are provided.

Preferably, these components or parts pertain to turbo machines, e.g. applied in the flow path hardware of a gas turbine, or components applied in power generation, in the aviation or the automotive industry. Such components, thus, preferably relate to high-performance materials, be it metals, ceramics or polymers.

Additive manufacturing techniques comprise e.g. powder-bed-fusion methods, such as selective laser melting (SLM) or laser powder bed fusion (LPBF), selective laser sintering (SLS) and electron beam melting (EBM).

Additive manufacturing, particularly powder-bed methods have proven to be useful and advantageous in the fabrication of prototypes or complex components, such as components with filigree structure or functionally cooled components. Further, additive manufacturing stands out for its short chain of process steps which in turn enables material economization and a particularly low lead time.

Related apparatuses or setups for such methods usually comprise a manufacturing or build platform on which the component is built layer-by-layer after the feeding of a layer of base material which may then be melted, e.g. by an energy beam, such as a laser, and subsequently solidified. The layer thickness is determined by a recoater that moves, e.g. automatically, over the powder bed and removes excess material from a manufacturing plane or build space. Typical layer thicknesses amount to between 20 µm and 40 µm. During the manufacture, said energy beam scans over the surface and melts the powder on selected areas which may be predetermined by a CAD-file according to the geometry of the component to be manufactured. Said scanning or irradiation is preferably carried out in a computer-implemented way or via computer-aided means, such as Computer-Aided-Manufacturing (CAM) instructions, which may be present in the form of a dataset. Said dataset or CAM-file may be or refer to a computer program or computer program product.

Laser Powder-bed Fusion (LPBF) is the most common type of Additive Manufacturing (AM) which has recently gained significant interest by various industries. However, the existence of residual stress and deformation after printing the final parts are inevitable due to the implication of high-temperature gradients during the process. Therefore, to prevent wasting time and money for minimizing residual stress and deformation experimentally by "trial and error" approaches, modelling and simulation provide the opportunity for resolving said problems. Finite element (FE) analysis is a well-known and precise analysis for conducting simulation and/or modeling. This tool enables to predict residual stress and deformation of the fabricated part after the process and modifying the process parameters or part design, therewith minimizing deformation and residual stress in the as-manufactured structure. However, the simulation and modelling in the mentioned context is still extremely challenging due to the following issues.

At first, there is a huge scale difference between the final part's dimension, which may be in the range of centimeters, and the welding beam diameter, being usually in the range of 100 µm or less. Therefore, for conducting FE analysis accurately, the minimum element size should be at least in the range of the laser spot diameter. Consequently, a huge number of elements, such as e.g. millions of elements, are required for the analysis. As a result, computational costs are very high for any related simulation.

On the other hand, to achieve a high accuracy, a very short time scale is required. This is due to the fact that relevant beam-material interaction occurs substantially in the microsecond regime. Therefore, for capturing a precise temperature profile during the process, very small time margins needs to be considered. Consequently, there will be a huge number of (iterative) temporal simulation steps for conducting the respective numerical analysis. As a result, a related analysis is extremely complex and lengthy.

Rapid thermo-mechanical modelling is, however, essential for industries in order to predict or approximate residual stress and deformation in advance of the actual printing job.

Researchers have tried to develop various methodologies for rapidly predicting of residual stresses and deformation. There are multiple commercial software solutions available e.g. for simulating the LPBF-process. However, the related methodologies are implemented too far from reality of the complex additive process.

Available approaches for addressing these issues comprise implementing the inherent strain method as one of the most common methodologies being widely used in most of the available commercial software solutions. However, this methodology lacks the transient thermal analysis. Here, only mechanical analysis is carried out for predicting residual stress and deformation which disqualifies the approach for powder bed fusion methods.

The inherent strain approach attempts to solve such problems purely by mechanical analyses on a macroscale. However, the inherent strain approach is not accurate enough when considering a realistic additive manufacturing process (see above). Other methodologies, however, lack the accuracy of having real temperature gradients and cooling rates induced in the process. Furthermore, these approaches do not consider scanning strategies of the laser scan.

Implementing a so-called "lumped model" is another approach for accelerating the simulation. In this methodology, an equivalent volume of heat flux is applied to each layer. As a drawback, however, laser scanning strategies cannot be considered in this approach. Another disadvantage of this methodology is that a real cooling rate and temperature gradient can hardly be modelled.

Yet, some researchers already used a so-called effective heat flux, i.e. a simple heat source without having a Gaussian profile. Therefore, by using this heat flux, the precise cooling rate and temperature gradient could not be captured in their model. In addition, they did not consider powder material properties in most of their approaches. Consequently, their model lacks phase transformation which is for thermo-mechanical analyses and reasonable modelling results in the context of additive manufacturing.

It is an object of the present invention to provide means that help to overcome the described difficulties in the modelling, and therewith to improve the additive manufacturing route, particularly that one of powder-bed fusion, as a whole.

The mentioned object is achieved by the subject-matters of the independent claims. Advantageous embodiments are subject-matter of the dependent claims.

An aspect of the present invention relates to a computer-implemented thermal modelling or simulation method for powder bed fusion additive manufacturing. The method comprises a microscale modelling step, including a single-track simulation of the powder bed with an energy beam, such as a laser or an electron beam, wherein a Gaussian heat source and an anisotropic heat conductivity of a buildup material, be it powdery and/or a solidified material for the component, are considered and wherein heat source parameters are identified or determined.

It is a matter of fact that in the given powder bed fusion methods, a thermal dissipation in the (vertical) z-direction is more dominant than in other directions, such as spatial x and y directions. This phenomenon arises from the thermally quasi-insulating property of the bed of powder particles and the good thermal conductivity along the additive build-up in the vertical direction.

The method further comprises a macroscale modelling step, using a Gaussian effective heat flux, particularly to provide line-type irradiation scans, wherein the heat source parameters and heat conductivity coefficient are adapted, modified or updated to a macroscale, i.e. to a larger spatial scale wherein increased layer thickness may be considered.

As an advantage the introduced methodology achieves to predict residual stress and deformation with high accuracy within a short period of time. Moreover, advantageously, a Gaussian profile of an (effective) heat source can be considered which ensures that an accurate temperature gradient and therewith a reasonable cooling rate for the complex additive manufacturing process is obtained. Knowledge and accurate control of such thermal management is particularly crucial for any mechanical analysis of the obtained structure for the component. The proposed methodology further excels by considering a scanning strategy with a locally defined energy input, such as a laser or electron beam.

Likewise the presented methodology allows to provide for a rapid thermo-mechanical modelling solution - using the mentioned effective heat source (heat flux) - for a quick prediction of residual stresses and deformation in the "printed" structure for the component.

The mentioned Gaussian effective heat flux means or relates to an acceleration of any numerical analysis as compared e.g. to state-of-the-art methods.

In an embodiment a cooling rate and/or an according temperature gradient is/are modified or imaged as well in an area adjacent to the irradiation scanning paths by the energy beam in the process. This means that e.g. also a "heat affected zone" is advantageously considered in the thermal modelling calculation. Therewith it can advantageously also be ensured that an accurate temperature gradient and a related cooling rate are accurately modelled on the macroscale.

In an embodiment, in the macroscale modelling, as well phase transformation of the build-dup material from a powder to a liquid phase and/or, subsequently, from a liquid phase to a solid phase for the final structure of the component is/are considered. This procedural feature provides for a further functional refinement of the proposed methodology as compared to conventional modelling approaches.

In an embodiment the microscale modelling is a single-layer and/or single-track simulation.

In an embodiment the macroscale modelling is a multi-layer and/or multi-track simulation.

In an embodiment, results, findings or an outcome of the thermal analysis are exported as an input to a mechanical analysis which may be carried out subsequently. According to this embodiment, the advantages of the thermal modelling are directly used for further required mechanical modelling steps.

In an embodiment, in a Gaussian heat source calibration of the microscale modelling, experimental melt pool dimensions are compared with numerical ones.

A further aspect of the present invention relates to a computer program or computer program product comprising instructions which, when the program is executed by a computer, data processing device or build processor, cause said means to carry out the modelling as described.

A computer program product as referred to herein may relate to a computer program means media constituting or comprising a computer-readable storage medium (be it volatile and nonvolatile) like a memory card, a USB-stick, a CD-ROM, a DVD or a file downloaded or downloadable from a server or network. Such product may be provided by a wireless communication network or via transfer of the corresponding information by the given computer program, computer program product or the like. A computer program product may include or be included by a (non-transitory) computer-readable storage medium storing applications, programs, program modules, scripts, source code, program code, object code, byte code, compiled code, interpreted code, machine code, executable instructions, and/or the like.

A further aspect of the present invention relates to a method of additive manufacturing a component via powder-bed fusion, selective laser melting or electron beam melting, wherein the component is constructed with the support of the modelling method as described above.

Advantages and embodiments relating to the described computer-implemented method and/or the described computer program (product) may as well pertain or be valid with regard to the manufacturing method and/or the as-manufactured component. Further features, expediencies and advantageous embodiments become apparent from the following description of the exemplary embodiment in connection with the Figures.
Figure 1 indicates the basic principles of a powder bed fusion additive manufacturing process.
Figure 2 indicates in a schematic flow chart method steps of the present invention.
Figure 3 indicates a simplified sketch of a Gaussian heat source implemented in a microscale modelling step.
Figure 4 indicates - in a perspective sketch - qualitatively the thermal impact of such a Gaussian effective heat source when applied to the target in a line-type layerwise irradiation manner.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

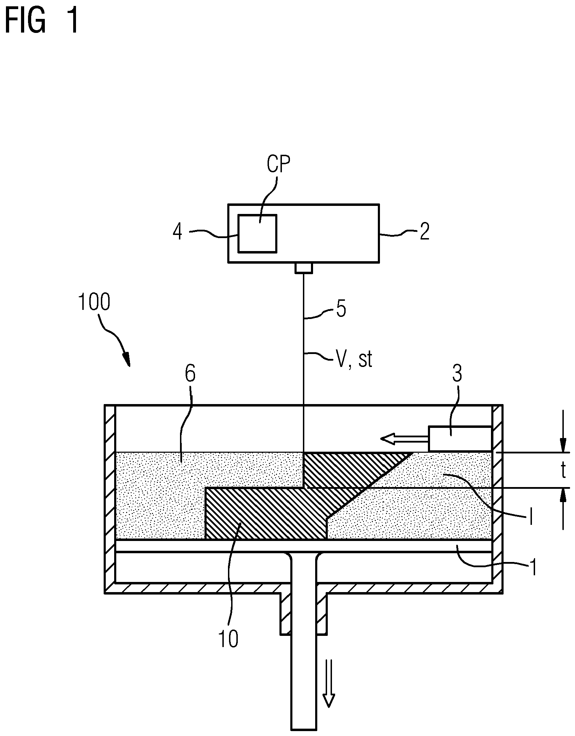

Figure 1 shows an additive manufacturing device 100. Said device 100 may be a conventional device for manufacturing any type of components by powder-bed-fusion (PBF). Such techniques employ a bed of a powder or base material which is selectively and layerwise exposed to or irradiated by an energy beam 5, such as a laser or an electron beam of an irradiation apparatus or energy beam source. Accordingly, the given PBF method may relate to selective laser sintering, selective laser melting or electron beam melting.

Said processes feature that the component (cf. reference numeral 10) is established or build up on top of a build platform 1. In other words, the component 10 is fused or welded onto said platform 1 and consecutively established by selectively solidifying the base material out of single layers according to its predefined geometry which is usually provided in form of a CAD-file. After the irradiation or fusing of each layer, the build platform 1 is usually lowered according to the layer thickness t and a new base material layer 1 is deposited on a manufacturing plane via a recoater 3.

The irradiation apparatus 2 is connected to or may be implemented via a computer program or processor, such as a build processor, as indicated by numeral 4. Said computer or build processor may be or may be coupled with a computer program (product) CP (cf. below). Said computer program or computer program product may - according to the present invention - comprise instructions to carry out the method as set forth below.

The component 10 as referred to herein may particularly relate to a part or an article of complex shape, such as with filigree portions of structures. Preferably, said component is, preferably, made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component 10 may relate to another or similar component.

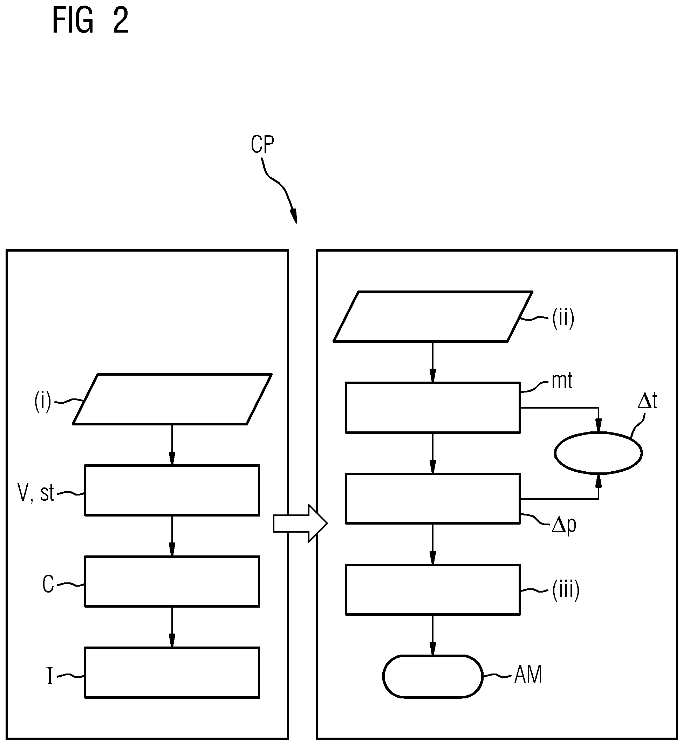

Figure 2 indicates in a schematic flow chart of inventive method steps. The method according to the present invention is a computer-implemented thermal modelling method for powder bed fusion additive manufacturing comprising a microscale modelling (i) step, including a single-track simulation of a powder bed 6 with an energy beam 5, wherein a Gaussian heat source G and an anisotropic heat conductivity of a build-up material 6 are considered, and wherein heat source parameters are identified I (cf. at the bottom left in Figure 2), and a macroscale modelling (ii) step, using a Gaussian effective heat flux, e.g. to provide line-type irradiation scans V, wherein the heat source parameters and a heat conductivity coefficient are adapted to a macroscale.

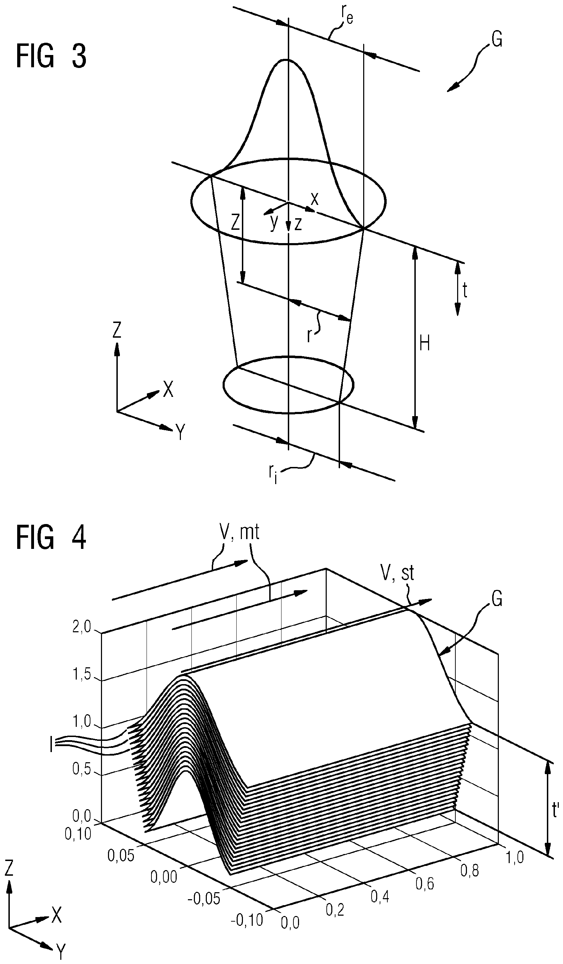

In other words, the method comprises - in the microscale modelling (i) - application of a conical Gaussian heat source (cf. Figure 3) as a volumetric heat source has been applied and based on comparing experimental melt pool dimensions with numerical ones, heat source calibration has been done. As a result, heat source parameters have been identified. Anisotropic thermal conductivity has been considered in the model due to the fact that thermal dissipation in the z-direction is more dominant than other directions.

In the macroscale modeling (ii), the method comprises a novel effective heat flux with a Gaussian distribution or profile. By considering such Gaussian shape of effective heat flux, an accurate cooling rate and temperature gradient can be obtained additionally in a heat affected area or zone adjacent to overlap area of laser scanning paths (see Figure 4 below).

E.g. in the macroscale modelling, a simulation for the first 20 to 30 layers, such as 25 layers, of any buildup for the component 10 and with e.g. 40 µm of layer thickness t has been carried out. After running the simulation, the overall temperature gradient of the process has been obtained. Then, with increasing the layer thickness to e.g. t'= 1 mm (cf. Figure 4 below), heat source parameters and heat conductivity may be adapted to ensure that a similar temperature gradient is acquired with larger layer thickness. Eventually, by conducting a thermal analysis and exporting related results as an input to a mechanical analysis, such as a decoupled thermo-mechanical analysis, the merits of such accelerated simulation approach can be exploited for acquiring far more accurate results. These results in turn lead to an improved knowledge of the additive manufacture as a whole and to strong improvement potential of such processes.

For more particulars of the presented methodology, especially the line-type and/or layerwise irradiation or related modelling, it is referred to Figures 3 and 4 below.

The macroscale modelling (ii) particularly features consideration or calculation of a phase transformation of the build-up material from a powder to a liquid phase and from the liquid phase to a solid phase. An energy beam induced phase transformation from the powder material 6 to a liquid phase melt pool and, subsequently, to a solid structure may, thus, be expediently taken into account for the modelling (see below) .

Preferably, the mentioned microscale modelling (i) is a single-layer and/or single-track simulation st.

The third step on the left side of the flow sequence which belongs to the microscale modelling, is indicated with reference numeral C standing for a calibration of the Gaussian heat source in the microscale modelling, wherein experimental melt pool dimensions are compared with numerical ones and heat source parameters H, r, such as those illustrated in Figure 3 are determined.

Other than illustrated in the process flows of Figure 2, the step of microscale modelling (i) and macroscale modelling (ii), may comprise the steps as listed in the boxes below, respectively.

On the right side, comprising the macro modelling (ii) sequence, it is indicated that, preferably, a multi-layer and/or multi-track simulation mt is carried out.

In the middle of the microscale sequence (ii), Figure 2 illustrates by means of numerals Δp that heat source parameters p and/or a heat conductivity coefficient for the simulation are updated or adapted, as mentioned above.

The connection of the boxes indicated with "mt" and "Δp" in Figure 2 shall indicate that both related process steps may preferably consider a temperature gradient ΔT or may be related to the cooling rate of any given portion during the additive process (see below).

Optionally, the presented method may comprise or feature a mechanical analysis as indicated with numeral (iii). Said mechanical analysis (iii) may either be incorporated into the macroscale modelling (ii) or may be carried out in a subsequent modelling or simulation step.

Figure 3 shows a perspective view, of a schematic Gaussian shape or profile, of an energy beam or a related heat source for irradiating the powder in the additive manufacturing process. It shall be indicated that the heat source model is calibrated based on melt pool dimensions which are measured experimentally. The heat source dimensions are being determined and calibrated so that the micro-scale modeling ends up with the same melt pool dimensions as those derived from the experiment.

The depicted profile has a Gaussian profile at the top, which is rotationally symmetric, and/or conical in shape in the lower area, wherein the beam center corresponds to the top of the profile. An inner circle of the image may correspond to an area hit by the beam, thus, to an irradiated plane of the powder bed in which a melt pool is directly formed upon irradiation.

A periphery of the melt pool may be formed by a mushy or heat affected zone in which a liquid-solid mixed phase may be present during the process. Also in this zone temperature control and modelling - e.g. adjacent to the scanning path's V - is crucial for a better understanding and improvement of powder bed based additive manufacturing processes.

Moreover, numeral H may indicate a heat penetration depth of the heat source or z-extension, whereas radii rₑ (spot radius) and rᵢ (minimum radius) relate to radial dimensions of the respective heat source.

Figure 4 indicates in a perspective view, line-type irradiation scans V in a single-track manner st, wherein the effective heat (source) is decaying along building direction (Z-direction) as a cone shape along the layers 1 (see above). Each of said scanning paths is expediently carried out with an energy beam constituting a Gaussian heat source or energy profile G, as is indicated by the Gaussian shape, respectively.

As mentioned above, the single-track paths st preferably relate to the microscale modelling, whereas multi-track paths V, mt may relate to the macroscale modelling.

With the presented methodology, a rapid thermo-mechanical model is proposed using an effective heat source for the fast prediction of residual stress and deformation of the printed part. Implementing an effective heat flux actually reduces computational costs significantly.

The proposed methodology indeed brings several advantages. An important advantage of the presented methodology relates to the benefit of conducting thermo-mechanical analyses on the macroscale using the introduced effective heat flux. Therewith, it is possible to present an accelerated approach for fast and accurate prediction of residual stress and deformation of the final printed parts. This methodology is, thus, much closer imaging the real experimental process and provides more accurate results as compared to other most common methodologies employing the inherent strain method which is only based on a mechanical analysis.

Therefore, instead of performing just "trial and error" experimental tests for obtaining a high quality of the parts, which is extremely costly, the methodology presented herein advantageously allows to predict residual stress and deformation quickly and accurately in order to increase reproducibility and reliability and prevent expensive wastage of the as-manufactured final component.

Preferably, in the macroscale modelling (ii) a "so-called" transient thermal analysis is considered which is a clear advantage as compared to other methodologies that are based on the inherent strain methodology.

A transient thermal analysis relates to the evaluation of a computational system's response to predetermined and varying boundary conditions over time. Frequently, transient analyses are used to evaluate transitions in operating conditions before the system returns to a steady state. In such cases, it is typical to find the steady-state solution to one set of operating conditions and then perform a transient analysis using a different set of operating conditions.

Yet another advantage of this methodology is the consideration of the Gaussian profile of or for the effective heat flux for obtaining an accurate cooling rate and temperature gradient close to the reality of the process. In addition, in this methodology, phase transformation from powder-to-liquid and liquid-to-solid phase can be implemented which is crucial for acquiring the precise prediction of residual stress and deformation in the as-printed structure. This is unique as other methodologies of the prior art do not consider any phase transformation in the respective macroscale model.

## Claims

1. Computer-implemented thermal modelling method for powder bed fusion additive manufacturing comprising:
- a microscale modelling (i) step, including a single-track simulation of a powder bed (6) with an energy beam (5), wherein a Gaussian heat source (G) and an anisotropic heat conductivity of a build-up material (6) are considered, and wherein heat source parameters are identified (I), and
- a macroscale modelling (ii) step, using a Gaussian effective heat flux, wherein the heat source parameters (H, r) and a heat conductivity coefficient are adapted to a macroscale.

2. Method according to claim 1, wherein a cooling rate and/or an according temperature gradient (ΔT) is modelled in an area adjacent to irradiation scanning path's (V).

3. Method according to claim 1 or 2, wherein in the macroscale modelling (ii) a phase transformation of the build-up material from a powder to a liquid phase and from the liquid phase to a solid phase are considered.

4. Method according to one of the previous claims, wherein the microscale (i) modelling is a single-layer and single-track (st) simulation.

5. Method according to one of the previous claims, wherein the macroscale modelling (ii) is a multi-layer and/or multi-track (mt) simulation.

6. Method according to one of the previous claims, wherein results of the thermal analysis are exported as an input to a mechanical analysis (iii).

7. Method according to one of the previous claims, wherein in a Gaussian heat source calibration (C) of the microscale modelling, experimental melt pool dimensions are compared with numerical ones.

8. A computer program product (CP) comprising instructions which, when the program is executed by a computer, data processing device or build processor (4), cause said means to carry out the modelling of one of claims 1 to 7.

9. Method of additive manufacturing (AM) a component (10) via powder-bed fusion, wherein the component (10) is constructed with the support of the modelling method according to the method one of claims 1 to 7.
